Europäisches Patentamt

European Patent Office

Office européen des brevets

(19)

(11) Numéro de publication: **0 294 250**
**A1**

## (12) DEMANDE DE BREVET EUROPEEN

(21) Numéro de dépôt: **88401026.5**

(22) Date de dépôt: **27.04.88**

(51) Int. Cl.⁴: **H 02 K 7/09**
**H 02 K 7/02**

(30) Priorité: **07.05.87 FR 8706462**

(43) Date de publication de la demande:
**07.12.88 Bulletin 88/49**

(84) Etats contractants désignés:
**AT BE CH DE ES GB GR IT LI LU NL SE**

(71) Demandeur: **Makkouk dit "Mourched", Souheil**
**32, Rue Baudin "Les Gémeaux Apt 2131 et 2134**
**F-92400 Courbevoie (FR)**

(72) Inventeur: **Makkouk dit "Mourched", Souheil**
**32, Rue Baudin "Les Gémeaux Apt 2131 et 2134**
**F-92400 Courbevoie (FR)**

(54) **Procédé et dispositif pour économiser l'énergie consommée par mouvements rotatifs des générateurs électriques.**

(57) L'appareil est constitué d'une roue (2) qui a la forme d'un disque. En face de la surface supérieure de cette roue (2) il y a un aimant (4). nt On fait passer dans une soléroïde (14) un courant électrique pour annuler l'effet du poids.

FIG.1

EP 0 294 250 A1

## Description

**Procédé et dispositif pour économiser l'énergie consommée par mouvements rotatifs des générateurs éléctriques.**

La présente invention concerne un procédé et un appareil pour l'économie au prix de la souroe de l'énergie consommée dans le mouvement rotatif des générateurs électriques, et de tous les corps à poids invariable, sans tenir compte de la nature ou de la matière de cette énergie, ou de la nature, et du domaine de fonctionnement de ces corps. "Pour résoudre le probléme du poids, c'est-à-dire du poids du rotor du générateur, l'invention indique que, pour réduire ou annuler l'effet négatif du poids et pour faciliter le mouvement de l'appareil, il faut appliquer une force magnétique attractive d un aimant permanent dans le sens contraire du magnétisme terrestre qui est appliqué sur la partie rotative de l'appareil. Cette force magnétique doit être égale exactement à la force du magnétisme terrestre qui est appliquée sur cette partie rotative de l'appareil Ainsi l'entrave du mouvement affectant les points d appui, à cause du poids, a disparu".

Il est possible, donc, d'actionner cette partie rotative en consommant une quantité d énergie inférieure, puisque le mouvement rotatif sera aisé et ainsi facilité.

De toute façon, l'invention sera mieux comprise a l'aide de la description qui suit, en référence au dessin schématique annexé

La figure 1. représente en, coupe, longitudiale, l'appareil selon l'invention

La figure 2, représente, en coupe, une variante de cet appareil.

La figure 3, représente, en coupe, l'appareil dans sa position horizontale.

Comme l'invention, qui a une forme verticale, est préférable, et comme l'invention présente fonctionne toujours par le même procédé qu il soit d'une forme verticale, ou horizontale, ou qu'il soit prévu pour opérer dans les installations de production.

On peut donc décrire un appareil prévu à utiliser dans les installations de production.

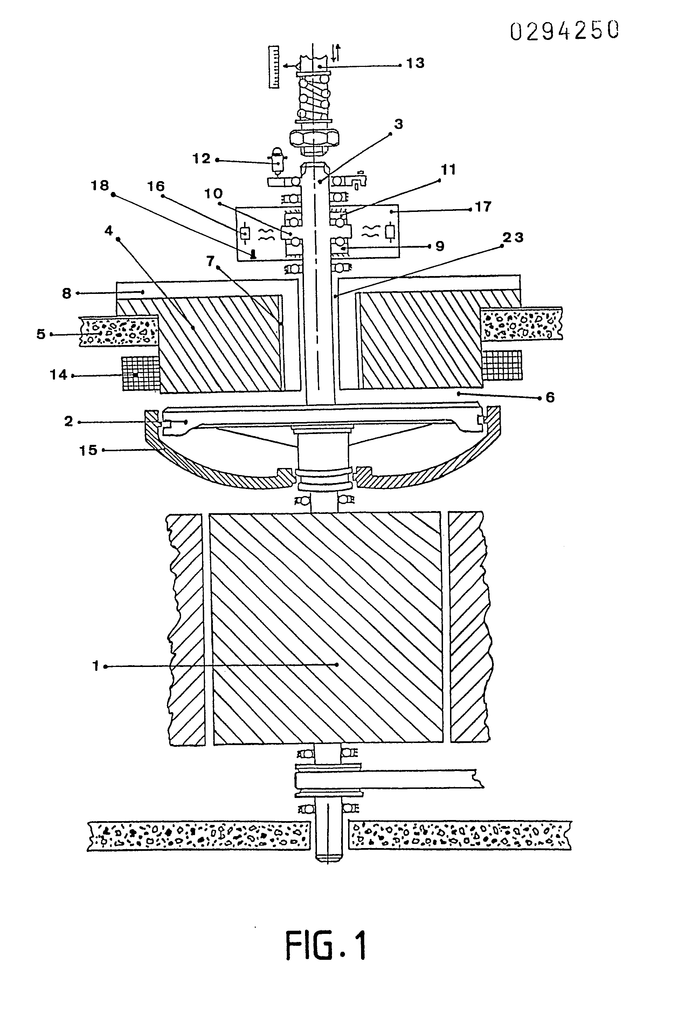

La figure 1, montre une coupe longitudiale de l'appareil qui comporte un générateur électrique 1, vient ensuite une roue 2, en acier magnétique, cette roue est solidement fixée à l'arbre 3, dont elle accompagne le mouvement de rotation sans le moindre jeu. Pour augmenter sa résistance, la roue 2, est consolidée sur sa face inférieure par des nervures, la roue et l'arbre sont reliés par une sorte de cloche 15, en alliage d'aluminium dur ou en acier. celle-ci est coupée verticalement en deux parties identiques qui se vissent l'une à l'autre et viennent se fixer autour de l'arbre 3, et de la roue 2, grâce à une longuette circulaire effectuée à leur diamètre. La longuette circulaire vient en effet, s'emboiter dans une rainure circulaire prévue à cet effet autour de la roue 2, et de l'arbre 3. Ce système vise à réduire la vibration axiale de la roue. La roue 2, doit avoir une épaisseur suffisante qui la rend en mesure d absorber toutes les forces du champ magnétique qui sont appliquées sur elle. Au-dessus de la roue 2, et à une distance étudiée, se trouve une tête d aimant permanent 4, celle-ci est cylindrique, et munie d un rebord circulaire sur toute sa circonférence supérieure, lui servant d'appui. Son pôle est parfaitement parallèle à la roue 2, la tête 4 en a, par ailleurs, le même diamètre. Elle est fixée sur le plancher 5, grâce à sa surface d'appui. Seul son corps cylindrique traverse le plancher 5, par une ouverture circulaire prévue à cet effet. Le plancher en question, est fait en béton armé dont les ferraillages sont acier non magnétique.

A noter qu il est nécessaire de savoir au préable, le poids de la partie rotative de l'appareil, puis on doit procéder au calcul pratiqué habituellement pour ce type de champs magnétiques pour déterminer la force du champ magnétique qui doit être appliquée par la tête d'aimant permanent 4, sur la roue 2, à partir d'une distance (d'entrefer)6, connue d avance et bien précisée afin que la force d'attraction soit en mesure d annuler l'effet du poids Mais la force du champ dans la tête magnétique 4, doit être réglée de manière à être un peu plus forte que la force magnétique déterminée par le calcul susmentionné, et ceci, en vue de permettre ultérieurement de régler la force magnétique de la tête 4, d'une manière plus précise.

Après fixation de la tête d'aimant permanent 4, qui est en état de saturation magnétique complète, on enroule un solénoïde 14, autour de la tête, capable d'assurer la re-magnétisation jusqu'à saturation de la tête en cas d'affaiblissement du champ magnétique par une cause quelconque.

Selon ce procédé d'exécution, la tête 4, peut être constituée de deux pièces adjacentes: une tête d'aimant permanent sous forme de cylindre percé d'un trou 7, et une pièce 8, en acier magnétique spécial sous forme de vis creuse; celle-ci est insérée dans le trou 7, du cylindre de la tête 4, pour assurer le transfert de la force du champ magnétique du pôle supérieur au coeur du pole inférieur. On veillera à ce que l'arbre 3, traverse le trou 23, de la pièce 8, sans le toucher. Vient ensuite et à une distance adéquate au-dessus de la tête 4, un roulement. Plus haut est fixée une butée à billes 9, sous un collet 10, se trouvant sur l'arbre 3, et qui sert à porter la partie rotative de l'appareil. (Le collet 10, peut être remplacé par un joint, ou une butée à billes à double effet). Une autre butée a billes 11, est fixée sur la partie supérieure du collet 10. Un roulement est fixé a l'extrémité de l'arbre 3.

Toutes les parties de l'appareil,proches du champ magnétique, (sauf la roue 2) peuvent être fabriquées en acier non magnétique.

Par ailleurs, on doit connaitre au préalable la température constante, produite par le frottement, à la fois du collet 10, des deux butées à billes 9 et 11, se trouvant en-dessous et au-dessus du collet 10, et de l'arbre 3, pendant le fonctionnement de l'appareil. Sur la base des informations de température obtenues, on fixe à la périférie de ces deux butées à billes 9 et 11, un élément chauffant 16, cylindrique.

Cet élément chauffant est logé dans une enveloppe 17, cylindrique reliée à un dispositif 18, permettant le réglage de la température. Cet élément chauffant, 16 peut être une résistance, une lampe à infra-rouge, ou un système à air chaud etc.

Avant de procéder au chauffement, il est nécessaire de connaître la plage de jeu des butées à billes 9 et 11, se trouvant sous et sur le collet 10. Cette information permet de s'assurer que le jeu du mouvement axial de l'arbre 3, après le chauffement, sera à son niveau niminal qu on puisse réaliser sans risque de grippage du collet 10, entre les deux butées à billes 9 et 11.

Le but de ce chauffement est donc de chauffer le collet 10, les deux butées à billes 9 et 11, et l'arbre 3, afin qu'ils atteignent leur température constante de fonctionnement nominal.

Ainsi, avant la mise en marche de l'appareil, on chauffe les butées à billes 9 et 11, le collet 10, et l'arbre 3, jusqu'à l'obtention du niveau de température voulue. Lorsque la température commence à augmenter, sous l'effet du frottement, on procéde simultanément à la réduction progressive de la température de l'élément chauffant 16, d'une manière inversement proportionnelle à l'augmentation de la température produite par le frottement. Ce processus se poursuit jusqu'à arrêt de l'élément chauffant 16, et obtention d une température constante. Ainsi, la température est uniquement produite par le frottement. De ce fait, la température des deux butées à billes 9 et 11, du collet 10, et de l'arbre 3, demeure stable durant le fonctionnement de l'appareil, tout en assurant une distance d'entrefer 6 invariable entre la roue 2 et la tête magnétique 4.

A noter qu il est nécessaire que la roue 2, ne rencontre pas,pendant son mouvement rotatif, des champs magnétiques variables (un pôlesud, puis un pôle-nord etc...) Ainsi, on est sûr que la roue et la tête ne chauffent pas à cause des courants (Foucault).

Pour régler la force du champ magnétique de la téte 4, et pour s assurer que la force qui va presser sur la butée à billes 9, sera toujours égale à la force qui va presser sur la butée à billes 11, pendant le travail de l'appareil, on fait passer très doucement et avec précaution dans le solenoïde 14, un courant électrique en sens inverse du courant qui a servi à la magnétisation.
Ainsi, le champ magnétique s'atténue doucement jusqu'à ce qu'il arrive au niveau de l'intensité requise pour réduire,au minimum, ou annuler l'effet négatif du poids.

On utilise un dispositif de mesure de distance 12, très sensible, pour un réglage précis. Ce dispositif 12, est mis provisoirement sur un roulement se trouvant sur l'arbre 3.

Un autre dispositif 13, spécialisé,qui permet de déterminer la moindre force possible peut bouger l'arbre 3, vers le haut et vers le bas Ce mouvement apparait-même minime- sur l'écran du dispositif de mesure de distance 12, et indique distinctement l'emplacement de l'effet de la pression, c'est-à-dire si cette pression existe sur la surface en dessous ou au dessus du collet 10 Ces deux derniers dispositifs 12 et 13, sont utilisés seulement avant la mise en marche de l'appareil.

Après avoir terminé toutes les étapes citées, et quand le dispositif de mesure de la puissance de la force 13, annonce que la force nécessaire pour faire bouger l'arbre 3, vers le haut est devenue équivalente exactement à la force nécessaire pour faire bouger cet arbre dans le sens contraire; à ce moment seulement, l'appareil devient prêt pour l'utilisation.

L invention présente peut être réalisée avec plusieurs variantes, notamment:

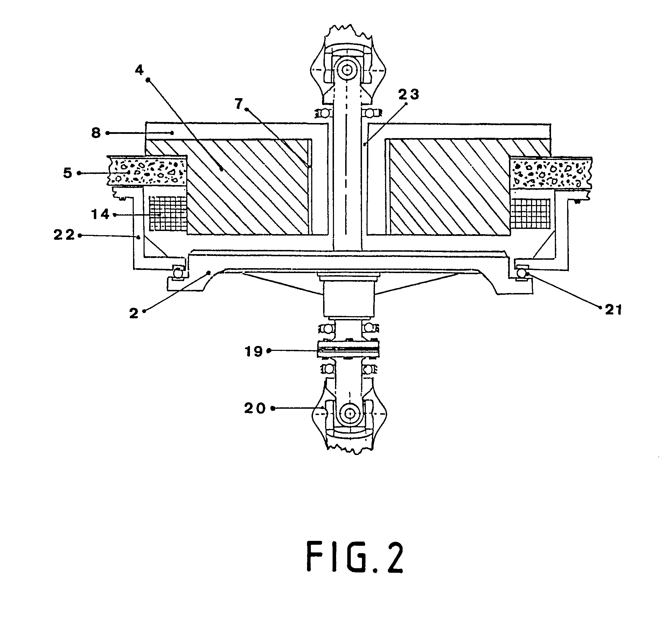

selon la variante 1, un dispositif d'isolation thermique (Fig. 2 Réf 19),semblable à la transmission du mouvement circulaire, est fixé sur l'arbre 3, directement sur la partie en dessous de la cloche 15, ou de la roue 2, afin d éviter le transfert de la chaleur du générateur vers la roue 2.

Selon la variante 2, un joint de cardon (Fig. 2 Réf 20) simple ou double, est fixé sur l'arbre 3, directement sur la partie en dessous de la cloche (Fig. 1 Réf. 15) ou de la roue, (Fig. 2 Réf. 2) ou du dispositif d'isolation (Fig. 2 Réf. 19).

Selon la variante 3, il existe une large butée à billes (Fig 2 Réf. 21), séparant entre la roue 2, et la tête magnétique 4, qui roule entre la roue et un grand corps cylindrique creux (Fig. 2 Réf. 22) fixé au toit 5. Et ceci permet de réduire la distance de l'entrefer 6, entre la tête et la roue. La butée à billes 21, peut être d'acier non magnétique.

Selon la variante 4, le collet 10 et les deux butées à billes 9 et 11, sont placés sur l'arbre 3 directement sur la zone,en dessous de la roue 2, ou de la cloche 15, au lieu de l'endroit décrit précédemment.

Selon la variante 5, les pièces qui doivent conserver un volume constant,au cours du cycle de fonctionnement de l'appareil, (les deux butées à billes, collet et l'arbre), peuvent être fabriquées en alliage (marque invariable) qui résiste la dilatation à une température raisonnable.

selon la variante 6, la roue 2 peut être elle-même un aimant permanent. Le pôle de la roue, opposé à la tête magnétique, a une polarité différente de celle du pôle de la tête magnétique 4.

Selon la variante 7, il existe un collet et une butée a billes sur l'arbre 3, destinés à lui interdire de se mouvoir vers le haut - et de même, à une distance convenable - il existe un autre collet et butée à billes qui ne lui permettent pas de bouger vers le bas. Ces deux butées à billes ont un système de réglage qui vise à renouveler l'opération de réglage du jeu axial de l'arbre 3, chaque fois que la plage de ce jeu augmente à cause de la corrosion par friction.

Selon la variante 8, la partie rotative 1, de l'appareil peut avoir plus d'une seule roue 2 et d'une seule tête magnétique 4. Il est donc possible d'augmenter le nombre de ces couples jusqu'à obtention du résultat souhaité.

Selon la variante 9, il est possible de fixer l'arbre 3, de l'appareil sur son extrémité inférieure,à condition d'appliquer le même principe du procédé relatif à l'opération de chauffement expliquée précédemment.

Selon la variante 10, la tête magnétique est constituée d'alliages (marque Alcomax),ou d'autres alliages,ayant les mêmes caractéristiques,qui permettent d'une opération de magnétisme anisotrope c'est-à-dire de manière à rendre le pôle,qui se trouve en face de la roue 2, plus fort que le pôle supérieur.

Selon la variante 11, la tête magnétique 4, peut avoir une forme cylindrique,sans solénoïde 14, et être basée sur le principe de la distance qui la sépare de la roue 2, c'est-à-dire que le réglage de la force du champ magnétique de la tête 4, est basé sur le rapprochement ou l'éloignement de celle-ci par rapport à la roue 2.

Selon la variante 12, la tête magnétique 4, est faite d'une pièce(au moins)en forme de fer à cheval.

Selon la variante 13, la tête magnétique 4, peut être constituée de deux cylindres creux concentriques,avec un éloignement convenable.

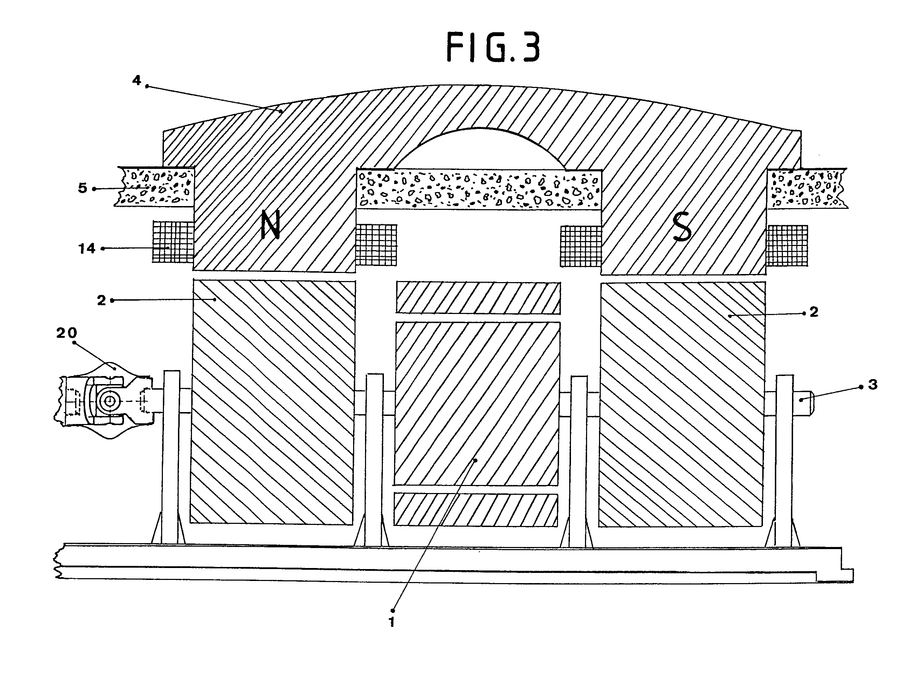

Selon la variante 14, l'appareil,de forme horizontale, selon la figure 3, n'en diffère que par la forme, le procédé et le principe étant identiques dans les deux formes. Les quelques modifications apportées sont inhérentes à la position horizontale de l'appareil. Celui-ci s'appuie, dans ce cas précis, sur des coussinets portés eux-mêmes par un châssis fixé au sol. La partie de l'arbre 3, portant les roues 2, est suffisemment longue pour mettre en mouvement, au moins, deux roues 2, destinées â l'opération de l'attraction de l'aimant 4.

**Revendications**

1.- Appareil pour l'économie au prix de la source de l'énergie consommée dans le mouvement rotatif des générateurs électriques, et de tous les corps,à poids invariable, sans tenir compte de la nature ou de la matière de cette énergie, ou de la nature, et du domaine de fonctionnement de ces corps, caractérisé en ce qu'il comporte un générateur électrique 1. Vient ensuite,une roue 2, en acier magnétique, solidement fixée à l'arbre 3, dont elle accompagne le mouvement de rotation sans le moindre jeu. La roue 2,est consolidée sur sa face inférieure par des nervures. L arbre 3 et la roue 2, sont reliés par une sorte de cloche 15. La roue 2, a une épaisseur suffisante qui la rend en mesure d'absorber toutes les forces du champ magnétique qui sont appliquées sur elle. Au-dessus de la roue 2 et à une distance étudiée 6, se trouve une tête d aimant permanent 4, celle-ci est cylindrique, qui se munie d'un rebord circulaire sur toute sa circonférence supérieure, lui servant d'appui. Son pôle est parfaitement parallèle à la roue 2. Toutes les parties de l'appareil, proches du champ magnétique (sauf la roue), peuvent être fabriquées en acier non magnétique.

On fait passer,très doucement,et avec précaution,dans le solénoïde 14, un courant électrique,en sens inverse du courant qui a servi à la magnétisation, jusqu'à ce qu il arrive au niveau de l'intensité requise pour réduire au minimum, ou annuler l'effet négatif du poids.

2.- Procédé pour l'économie au prix de la source de l'énergie consommée dans le mouvement rotatif des générateurs électriques, et de tous les corps,à poids invariable, sans tenir compte de la nature ou de la matière de cette énergie, ou de la nature, et du domaine de fonctionnement de ces corps, caractérisé en ce qu'il indique que "pour réduire ou annuler l'effet négatif du poids de la partie rotative d'un appareil, il faut appliquer une force magnétique attractive,d'un aimant permanent, sur une roue d'acier magnétique qui doit être fixée sur l'arbre de la partie rotative de l'appareil. Cette force magnétique est dans le sens contraire du magnétisme terrestre, et doit étre égale,exactement,à la force du magnétisme terrestre qui est appliquée sur cette partie rotative".

3.- Appareil selon la revendication 1, caractérisé en ce que la roue 2, peut être elle-même un aimant permanent, le pôle de la roue, opposé à la tête magnétique 4, a une polarité différente de celle du pôle de la tête magnétique.

4.- Appareil selon la revendication 1, caractérisé en ce qu'il existe un collet et une butée à billes sur l'arbre 3, destinés à lui interdire de se mouvoir vers le haut - et de même, à une distance convenable - il existe un autre collet et butée à billes qui ne lui permettent pas de bouger vers le bas. Ces deux butées à billes ont un système de réglage qui vise à renouveler l'opération de réglage du jeu axial de l'arbre 3, chaque fois que la plage de ce jeu augmente,à cause de la corrosion par friction.

5.- Appareil selon la revendication 1 et 3, caractérisé en ce que la partie rotative 1, de l'appareil peut avoir plus d'une seule roue 2, et une seule tête magnétique 4. Il est donc possible d'augmenter le nombre de ces couples jusqu à obtention du résultat souhaité.

6.- Appareil selon la revendication 1,3 et 5, caractérisé en ce que la tête magnétique 4, peut avoir une forme cylindrique sans solenoïde 14, et être basée sur le principe de la distance qui la sépare de la roue 2, c'est-à-dire que le réglage de la force du champ magnétique de la tête,est basé sur le rapprochement,ou l'éloignement, de celle-ci par rapport à la roue 2.

7.- Appareil selon la revendication 1, 5 et 6, caractérisé en ce que la tête magnétique 4 peut être constituée de deux cylindres creux,concentriques,avec un éloignement convenable.

8.- Appareil selon la revendication 1, 6 et 7, caractérisé en ce que la tête 4 est fixée sur le plancher 5, grâce a sa surface d'appui. Seul son corps cylindrique traverse le plancher 5, par une ouverture circulaire prévue à cet effet. Le plancher 5, en question, est fait en béton armé,dont les tiges en acier non magnétique.

9.- Appareil selon les revendications 1, 5, 6 et 7, caractérisé en ce que la tête 4, constituée de deux pièces adjacentes: une tête d aimant permanent, en forme de cylindre, percée d'un trou 7, et une pièce 8, en acier magnétique, en forme de vis creuse; celle-ci est insérée dans le trou 7, du cylindre de la tête 4. L'arbre 3, traverse le trou 23, de la pièce 8, sans le toucher.

10.- Appareil selon les revendications I et 4, caractérisé en ce qu'il existe une butée à billes 9, sous un collet 10, se trouvant sur l'arbre 3, et qui sert à porter la partie rotative 1, de l'appareil. (Le collet 10, peut être remplacé par un joint, ou une butée à billes à double effet). Une autre butée à billes 11, est fixée sur la partie supérieure du collet 10.

11.- Appareil selon les revendications I et 4, caractérisé en ce qu il existe,à la périférie de deux butées à billes 9 et 11, un élément chauffant 16, cylindrique,logé dans une enveloppe 17,cylindrique reliée à un dispositif 18, permettant le réglage de la température des deux butées à billes 9, 11, du collet 10, et de l'arbre 3. Ainsi la température demeure stable durant le fonctionnement de l'appareil, tout en assurant une distance d entrefer 6, invariable, entre la roue 2 et la tête magnétique 4.

12.- Appareil selon la revendication 1, caractérisé en ce qu'il est possible de fixer l'arbre 3, de l'appareil sur son extrémité inférieur, à condition d'appliquer le même principe du procédé relatif à l'opération de chauffement.

13.- Appareil selon les revendications I et 6, caractérisé en ce que la tête magnétique est faite d'une pièce (au moins) en forme de fer à cheval.

14.- Appareil selon la revendication 1, caractérisé en ce que l'appareil de forme horizontale, selon la figure 3, n'en diffère que par la forme, le procédé et le principe étant identique dans les deux formes. les quelques modifications apportées sont inhérentes à la position horizontale de l'appareil. celui-ci s'appuie, dans ce cas précis, sur des coussinets portés eux-mêmes par un châssis fixé au sol. La partie de l'arbre 3, portant les roues 2, est suffisamment longue pour mettre en mouvement, au moins, deux roues destinées à l'opération de l'attraction de l'aimant 4.

0294250

FIG.1

FIG.2

# FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-1 144 222 (SIEMENS-SCHUCKERT) * Page 1, colonne de droite, ligne 3 - page 2, colonne de gauche, ligne 50; page 2, colonne de droite, ligne 47 - page 3, colonne de droite, ligne 18; figure 1 * | 1,2,5,7 ,8,12 | H 02 K   7/09 H 02 K   7/02 |
| A |  | 4,10,11 | |
| | --- | | |
| Y | DE-C- 824 231 (SIEMENS-SCHUCKERT) * Page 1, lignes 24-32; page 2, lignes 26-76; figures 1,2 * | 1,2,5,7 ,8,12 | |
| | --- | | |
| X | EP-A-0 052 345 (MAGNET-MOTOR) * Page 8, lignes 5-16; figure * | 2,3,6 | |
| | --- | | |
| A | DE-A-2 336 488 (MATTHIAS) * Page 4, ligne 1 - page 5, ligne 3; figure * | 4,10 | |
| | --- | | |
| A | DE-C- 923 704 (SIEMENS-SCHUCKERT) * Page 2, lignes 83-93; figure * | 9 | DOMAINES TECHNIQUES RECHERCHES (Int. Cl.4) |
| | --- | | |
| A | FR-A-1 020 676 (GUILLOUROUX) * Page 1, colonne de gauche, ligne 1 - page 1, colonne de droite, ligne 28; figures 1,2 * | 13,14 | H 02 K |
| | --- | | |
| A | US-A-4 223 240 (THEYSE) * Colonne 6, lignes 31-36; figure 7 * | | |
| | ----- | | |

Le présent rapport a été établi pour toutes les revendications

| Lieu de la recherche | Date d'achèvement de la recherche | Examinateur |
|---|---|---|
| LA HAYE | 12-07-1988 | TIO K.H. |

EPO FORM 1503 03.82 (P0402)